# EUROPÄISCHE PATENTSCHRIFT

(11) **EP 3 284 996 B1**
(45) Veröffentlichungstag und Bekanntmachung des Hinweises auf die Patenterteilung: **28.08.2019**
(21) Anmeldenummer: 17401081.9
(22) Anmeldetag: 19.07.2017
(51) Int. Cl.: F16L 59/14, F16L 59/22, B33Y 80/00

(54) **MEHRWANDIGES ROHRBAUTEIL UND HERSTELLUNGSVERFAHREN DAFÜR**
MULTI-WALLED PIPE COMPONENT AND METHOD FOR PRODUCING THE SAME
TUBE À PAROIS MULTIPLES ET SON PROCÉDÉ DE FABRICATION

(30) Priorität: 18.08.2016 DE 102016115335
(43) Veröffentlichungstag der Anmeldung: 21.02.2018
(73) Patentinhaber: Karlsruher Institut für Technologie, 76131 Karlsruhe (DE)
(72) Erfinder: Neuberger, Heiko, 76351 Linkenheim (DE); Köhly, Christina, 76135 Karlsruhe (DE)

(56) Entgegenhaltungen:
- EP-A1- 2 942 489
- EP-A1- 2 963 267
- US-A1- 2016 169 550

## Beschreibung

Die Erfindung betrifft ein mehrwandiges Rohrbauteil für fluiddurchströmte Leitungen sowie ein Herstellungsverfahren dafür.

Aus dem Stand der Technik sind verschiedene doppelwandige, isolierte Rohrbauteile für fluiddurchströmte Leitungen, die einen konstanten Querschnitt haben, bekannt, wie Wärmetauscher oder Gasmischer.

Um eine thermische Isolation von Fluiden innerhalb einer Rohrleitung zu erreichen, offenbart GB 2 519 411 A doppelwandige Rohre, wobei ein rohrförmiges Bauteil mittels eines generativen Fertigungsverfahrens hergestellt werden kann. Dabei wird ein metallisches Rohr mit einer inneren und einer äußeren Wandung bereitgestellt, die einen leeren Hohlraum umschließen und stirnseitig verschlossen sind.

Ferner sind Bauteile mit Hohlräumen bzw. sandwichartigen Strukturen aus dem Automobilbereich bekannt, wobei stets eine Schweißnaht oder eine Verbindungsfuge die einzelnen Bauteile zusammenfügt bzw. verbindet. Die EP 2 942 489 A1 beschreibt ein doppelwandiges Rohr, wobei das Innenrohr mit dem Außenrohr zur Stabilisierung über einen Steg oder Verbindungspunkte verbunden ist.

Ferner ist aus der US 2016/ 0 169 550 A1 ein doppelwandiges Rohrbauteil bekannt, dessen Zwischenräume mit einem Einblasdämmstoff oder einem anderen Material gefüllt sein können.

Nachteilig am vorgenannten Stand der Technik ist, dass das Verschweißen von Einzelsegmenten bzw. einzelnen Rohren zu thermisch bedingtem Verzug der jeweiligen Außenwandung führt. Somit kann kaum ein umlaufender Ringspalt konstanter Breite in einer normalen Ebene entlang einem Zentralkurvenbereich mit 1 mm und kleiner erreicht werden, der notwendig ist, um eine gute elektrische wie thermische Isolierung und Stabilität des Bauteils zu erreichen. Es bilden sich so elektrische bzw. thermische Brücken, so dass keine durchgängige Isolierung vorliegen kann. Ferner können Schweißspritzer zu ungewollten Anbindung zwischen den Wandungen führen, da die Nahtwurzel oder etwaige Schweißfehler nicht nachbearbeitet werden können. Durch die ringförmige metallische Abschlussverbindung (siehe GB 2 519 411 A) entstehenden Seiten ist eine thermische Isolationswirkung begrenzt, die vorrangig zur Positionierung der Innen- und Außenwandung dient. Auch sind komplexe Rohrgeometrien nur schwierig möglich, bzw. eine elektrische Isolation durch umlaufende Schweißnähte nicht mehr durchgängig.

Ausgehend von diesem Stand der Technik ist es Aufgabe der vorliegenden Erfindung, ein verbessertes Bauteil bereitzustellen, dass eine thermische und elektrische Isolierung effizient ermöglicht.

Diese Aufgabe wird durch ein Bauteil mit den Merkmalen des Anspruchs 1 gelöst.

Die weitere Aufgabe ein verbessertes Verfahren zur Herstellung eines vorgenannten Bauteils zu schaffen, das kostengünstig und einfach durchzuführen ist, wird durch das Verfahren mit den Merkmalen des unabhängigen Anspruchs 7 gelöst.

Die Aufgabe ein verbessertes Verfahren zur Herstellung eines Bauteils zu schaffen, das zeitsparend durchgeführt werden kann, wird durch das Verfahren mit den Merkmalen des unabhängigen Anspruchs 9 gelöst.

Weiterbildungen bzw. bevorzugte Ausführungsform der Herstellungsverfahren und des mehrwandigen Bauteils sind in den Unteransprüchen ausgeführt.

Eine erste Ausführungsform bezieht sich auf ein mehrwandiges Rohrbauteil für fluiddurchströmte Leitungen und drucktragende Körper. Erfindungsgemäß ist das Rohrbauteil ein mittels generativer Fertigungsverfahren gefertigtes, gebogenes, gewinkeltes oder gegabeltes Rohrbauteil und ist aus ineinander angeordneten, jeweils einstückigen und untereinander nicht verbundenen Wandungsteilen aufgebaut. Dabei umschließt eine äußere Wandung in Umfangsrichtung eine oder mehrere innere Wandung(en), so dass zwischen der äußeren Wandung und der einen oder mehreren inneren Wandung(en) ein Hohlraum gebildet ist, der mit einem Füllmaterial gefüllt ist.

Die Erfindung betrifft generativ hergestellte mehrwandige Rohrsegmente und Formstücke, die schichtweise zur Einbringung thermischer oder elektrischer Isolationsschichten oder duktiler Lagen für fluiddurchströmte Leitungen oder drucktragende Körper aufgebaut sind. Vorteilhaft sind zwischen den einzelnen Wandungen nach dem vollendeten Herstellungsprozess keine Verbindungsstreben oder andere Verbindungselemente angeordnet. So ist nicht - wie im Stand der Technik - eine metallische Verbindung notwendig; der Hohlraum ist komplett zugänglich und die Stirnseiten können durch Keramiksegmente verschlossen werden. Der Hohlraum sollte dabei einen Ringspalt bilden der in einer vergleichbaren Größenordnung wie die Wandungsstärke liegen sollte, bevorzugt in einem Bereich von 0,5 mm bis 2 mm, besonders bevorzugt bei 1 mm. Es können verschiedenste Bauteile hergestellt werden, die eine beliebige Geometrie aufweisen; sie sind nicht nur auf gerade Rohre festgelegt, sondern es können auch gewickelte Rohre, Spiralrohre, gekrümmte, gekreuzte sowie andere, beliebige Rohrformen hergestellt werden.

Erfindungsgemäß weist der Hohlraum in vorbestimmten Abständen entlang seines Umfangs teilkreisförmige Ausbuchtungen auf, die den Hohlraum in bestimmten Abschnitten erweitern. Die Abstände sind bevorzugt regelmäßig, können aber auch unregelmäßig sein - so können die Abstände gerade in Bereiche einer Rohrkrümmung sich dieser Krümmung angepasst gewählt werden. Die Ausbuchtungen erstrecken sich in Längsrichtung des Bauteils entlang dessen gesamter Länge. Damit entstehen zylindrische Hohlraumstrukturen, die gut mit Füllmaterial zu füllen sind. Es werden dabei nur temporäre Brücken oder Streben zwischen den einzelnen Wandungen, bzw. Wandungsteilen zur Positionierung bei Befüllung, benötigt bzw. in dem Fertigungsprozess realisiert. Eine Positionierung der Bauteilkomponenten und somit Abstützung der Wandungen zueinander kann innerhalb des Hohlraums mit geeigneten Füllmaterialien erfolgen. Danach können die "Brücken" entfernt werden.

Je nach Anwendungsgebiet kann das Füllmaterial ein elektrisch bzw. thermisch isolierendes Material sein. In ersterem Fall kann dies ein Kunststoff oder eine Keramik sein. Im Fall, dass das Füllmaterial thermisch isolierend wirken soll, kann ein weiteres Metall mit geringerer thermischer Leitfähigkeit als die umgebenden Wandungen oder eben auch eine Keramik, ein Glas (z. B. Bor- oder Silikatglas) oder Kunststoff oder Kombinationen aus den vorgenannten Materialien (insbesondere Verbundstoffe oder auch Kunststoff- bzw. Kohlenstoff-Nanoröhrchen) verwendet werden. Alternativ kann auch eine Flüssigkeit oder Schaum eingebracht werden. Je nach verwendetem Material ist eine sehr gute elektrische Isolation bzw. thermische Isolation möglich. Thermische Differenzdehnungen zwischen Außen- und Innenhülle können beispielsweise durch elastische Doppelwandstrukturen, zum Beispiel einem Faltenbalg oder Ähnlichem, kompensiert werden welche konstruktiv unter Berücksichtigung der Eigenschaften des Isolationsmateriales direkt in die Bauteilgeometrie miteingebracht werden können

Zum Füllen der Hohlräume können verschiedene Materialien in Frage kommen. In einer Ausführungsform der Erfindung kann vorgesehen sein, dass das Füllmaterial bewegliche Kleinteile, insbesondere Kugeln sind. In einer Weiterbildung der Erfindung kann vorgesehen sein, dass die Kugeln in zwei Größen vorliegen, wobei die größeren der Kugelgrößen in die Abschnitte der Ausbuchtungen passen und die kleineren der Kugelgrößen in den restlichen Abschnitten des Hohlraums. Damit können die Wandungsteile gut gegeneinander stabilisiert werden.

Alternativ kann das Füllmaterial eine duktile Zwischenlage sein, die z.B. aus einer weiteren Metallschicht bestehen kann. Hierbei eignet sich z. B. Chrom, da es eine hohe Festigkeit sowie eine hohe Zähigkeit besitzt. Mit dieser duktilen Zwischenlage kann die Versagenswahrscheinlichkeit (Rissbildung) des ganzen Bauteils gemindert werden. Hierzu ist eine Anlage für generative Fertigungsverfahren notwendig, die geeignet ist zwei oder mehr verschiedene metallische Pulver gleichzeitig zu verarbeiten. Somit kann ein zwei- oder mehrschichtiges Bauteil in einem Prozess hergestellt werden. Dabei wird der Raum zwischen der äußeren und inneren Wandung des mehrwandigen Bauteils direkt bei der Herstellung mit einem duktilen Material verfüllt, das im Schadensfall den Rissverlauf beispielsweise nach dem Durchdringen einer Wandung beendet oder zumindest entlang der Trennebene zu einer anderen Schicht umgelenkt.

Die Erfindung kann in einer weiteren Ausführungsform vorsehen, dass das Bauteil zwei oder mehr Stirnseiten aufweist, die jeweils mit einem Verschlusselement aus elektrisch und/oder thermisch isolierendem Werkstoff verschlossen sind. So kann ein solches Verschlusselement bspw. ein keramischer Deckel sein, der den annähernd ringförmigen Hohlraum an den Enden verschließt und damit ein Herausfallen des Füllmaterials verhindert. Vorteilhaft können mehrwandige Strukturen mittels generativer Herstellungsverfahren realisiert werden, dabei sind nicht nur doppelseitige Strukturen, sondern drei bis vier oder noch mehrlagigere Strukturen möglich.

In einem erfindungsgemäßen Verfahren zum Herstellen eines erfindungsgemäßen Bauteils für fluiddurchströmte Leitungen und drucktragende Körper wird/werden zunächst ein oder mehrere Metallpulver bereitgestellt, das/die zur Erzeugung zumindest eines metallischen Bauteils geeignet ist. Es sind verschiedene Materialien können verwendet werden, so zum Beispiel Kupfer, Stähle, Aluminium, Wolfram oder Ähnliches.

In einem weiteren Schritt werden das/die innere(n) Bauteil-Wandung(en) und die äußere Bauteil-Wandung, die die zumindest eine innere Bauteil-Wandung umschließt, mittels generativer Herstellungsverfahren aufgebaut. Insbesondere Pulverbettverfahren, wie Laserschmelzen, Lasersintern, ferner Freiraumverfahren, wie Metall-Pulver-Auftragsverfahren (MPA), Flüssigmaterialverfahren, sowie andere Schichtaufbauverfahren, wie 3-D Siebdruck von Metallen können angewendet werden. Bevorzugt können zur Herstellung von Hohlräumen zwischen den Wandungen Pulverbettverfahren genutzt werden. Das Einbringen von duktilen Zwischenschichten gleichzeitig während der Herstellung der Wandungen erfordert jedoch ein Metall-Pulver Auftragsverfahren mit separaten Pulverzuführungen.

Um ein Bauteil mit dem Zweck einer thermischen Isolation zu realisieren, wird ein Hohlraum zwischen der äußeren Wandung und der einen oder mehreren inneren Wandung(en) belassen und die Bauteil-Stirnseiten offen gelassen. Dabei wird ein Hohlraum zwischen der äußeren Wandung und der einen oder mehreren inneren Wandung(en) belassen um das nicht gebundene Metallpulver zu entfernen. Der Hohlraum wird später befüllt und die Bauteil-Stirnseiten werden offen gelassen. Die generativ mit hergestellten Brücken dienen lediglich der Wahrung des Abstands der Wandschichten zueinander und werden nach Befüllung entfernt um die elektrische und thermische Isolierung der Wände zueinander zu gewährleisten.

Danach kann der Abstand der zwei Wandungen durch temporär genutzte Stege zueinander stabilisiert werden, um zu vermeiden, dass die Innen- und die Außenwandung sich berühren und ein thermischer bzw. elektrischer Kontakt hergestellt wird. Die Stege sind in ähnlicher Wandstärke wie das Gesamtbauteil ausgeführt und bilden in dem Hohlraum eine netzartige Struktur.

Anschließend wird der Hohlraum mit Füllmaterial befüllt. Dabei wird die netzartige Struktur und eventuelle Abstandshalter entfernt.

In einem weiteren Schritt werden die Bauteil-Stirnseiten verschlossen, um das Bauteil fertig zu stellen. Dabei werden die Bauteil-Stirnseiten durch einen elektrisch isolierenden Werkstoff, insbesondere keramischen Werkstoff verschlossen. Die stirnseitigen Verschlusselemente können je nach Randbedingung der Anwendung und Ausführung der Bauteile mit verschiedenen Verfahren befestigt werden, z.B. durch Kleben, Einpressen, Schweißen, Umbördeln eines Blechfalzes, etc. Es können exakt definierte komplett zugängliche Hohl- bzw. Zwischenräume mit keramischen Verschlusssegmenten gefertigt werden, so dass eine homogene elektrische bzw. thermische Isolation bzw. die Absicherung gegen Rissausbreitung erreicht werden kann.

Die Anwendung generativer Verfahren ermöglicht eine einfache Realisierung doppel- oder mehrwandiger metallischer Strukturen mit exakt definiertem und komplett über den stirnseitig zugänglichem Zwischenraum. Je nach benötigter Anwendung zur Fertigung von fluiddurchströmten hochpräzisen Bauteilen beliebiger Geometrie kann der Hohlraum zwischen Innen- und Außenwandung beliebig befüllt werden, ohne eine thermisch/elektrisch leitende Verbindung herzustellen. Die Fertigung der Bauteile beschränkt sich auf wenige Schritte, so dass das erfindungsgemäße Herstellungsverfahren besonders kosten- und zeitsparend ist. Fertigungstoleranzen bzw. Ungenauigkeiten können durch viele zwischengeschaltete Fertigungsschritte entfallen. So müssen bisher vergleichbare Komponenten bestehend aus einzelnen Blechsegmenten mittels Schweißverfahren zusammen gefügt werden (Thermischer Verzug) - dieser Schritt kann bspw. nun entfallen.

Zum Stabilisieren des Hohlraums und zur Vorbereitung des Hohlraums für das Füllen können vorder Füllung mit Füllmaterial in den Hohlraum Abstandshalter in die Ausbuchtungen eingebracht werden. Dabei können die Abstandshalter einfach "mitgedruckt" werden oder sie werden als stiftförmige Elemente nach Fertigstellung des Rohlings mit direkt in den Hohlraum eingesetzt. Nach der Füllung mit Füllmaterial können diese Abstandshalter aus den Ausbuchtungen wieder entfernt werden, wobei der verbliebene Zwischenraum, der durch entfernen der Abstandshalter nun frei wird, ebenfalls befüllt werden kann wenn dies erforderlich ist.

Zum Stabilisieren des Hohlraums und Verbessern der thermischen/elektrischen Isolierung wird der Hohlraum mit dem Füllmaterial befüllt. Bei dem Füllmaterial kann es sich um Kugeln aus einem keramischen Material handeln. Wie oben beschrieben, ist das Füllmaterial bevorzugt ein elektrisch bzw. thermisch oder kombiniert thermisch-elektrisch isolierendes Material. Werden Keramikkugeln verwendet, dienen diese besonders der thermischen und elektrischen Isolierung und ermöglichen eine verbesserte Füllbarkeit.

Alternativ kann eine thermische und/oder elektrische Isolationsschicht auch in flüssiger Form eingebracht werden. Dies kann durch eintauchen, einspritzen etc. geschehen. Auch kann beispielsweise ein Metallschaum einbracht werden der durch einen hohen Gasanteil thermisch isolierend wirken kann.

Alternativ ist eine massive, duktile Zwischenlage möglich, die in einer Ausführungsform der Erfindung während der generativen Fertigung der Innen- und Außenwandungsteile des Bauteils gleichzeitig mitgefertigt werden kann. Diese duktile Zwischenlage kann ein anderes Metall sein und dazu dienen, eine Ebene zur Verhinderung von Rissausbreitung zu bilden. Dazu können zwei verschiedene metallische Pulver während der generativen Fertigung zugeführt werden. Die Innen- und die Außenwandung wird aus einem ersten Metall, die duktile Zwischenlage aus einem anderen Metall hergestellt. Dabei wird zwischen der Innen- und der Außenwandung nicht direkt ein Hohlraum gebildet, sondern es kann gleich eine massive mehrlagige Struktur aus verschiedenen Materialien hergestellt werden. Die duktile Zwischenlage dient insbesondere dazu eine mögliche Rissausbreitung zu verhindern. Alternativ kann die Zwischenlage auch in einem flüssigen Zustand nach vorheriger generativer Herstellung des Bauteils durch Einspritzen, Eintauchen des Körpers etc. erfolgen.

In einer alternativen Ausführungsform der Erfindung kann vorgesehen sein, dass die äußere Wandung zwei oder mehr Anschlüsse, bspw. Ventile aufweist, die fluidisch mit dem Hohlraum verbunden sein können. Diese Anschlüsse können während dem generativen Fertigungsprozess hergestellt sein und ermöglichen das Durchströmen der Hohlräume mit einem Fluid, wie einem Gas oder einer Kühlflüssigkeit. Somit kann je nach Anwendung Wärmeenergie über den Ringspalt z. B. an einen Kühlkreislauf übergeben werden. Dies ist insbesondere dann vorteilhaft, wenn der Hohlraum bis auf das Fluid selbst leer oder teilweise, z.B. mit Kugeln oder offenporigem Schaum, gefüllt ist.

Die Erfindung kann zur Herstellung eines solchen erfindungsgemäßen Bauteils mit duktiler Lage vorsehen, dass zumindest zwei Metallpulver geeignet zur generativen Erzeugung zumindest eines metallischen Bauteils bereitgestellt werden. Ferner wird zum Aufbau der Wandungen erstes Metall zugeführt und durch generatives Aufbauen eine oder mehrere inneren Bauteil-Wandung(en) und die äußeren Bauteil-Wandung, die die zumindest eine innere Bauteil-Wandung umschließt, aufgebaut. Dabei wird gleichzeitig zwischen der äußeren Wandung und der zumindest einen inneren Wandung ein zweites Metalls als Füllmaterial, insbesondere als duktile Zwischenlage, zugeführt.

Soll ein Bauteil mit einer kontinuierlichen duktilen Zwischenlage hergestellt werden, kann diese auch direkt generativ mit eingebracht werden, wenn generative Verfahren mit separater Pulverzuführung genutzt werden, wie z. B. Freiraumverfahren, wie Metall-Pulver-Auftragsverfahren sind verfügbar. Alternativ könnte die Einbringung der duktilen metallischen Zwischenlage aber auch in flüssigem Zustand eingebracht werden (z.B. Eintauchen oder Einspritzen oder Eingießen). Hierzu muss die Schmelztemperatur des duktilen metallischen Zwischenwerkstoffes deutlich unter der des Hüllmateriales liegen. Je nach Anwendungsfall kann auch die Herstellung von mehrwandigen Strukturen bestehend aus mindestens drei Hüllen von Vorteil sein. Grundsätzlich ist ein schichtweiser Aufbau aus Außenhülle, verfülltem Hohlraum zur Isolation, Zwischenhülle, duktiler Schicht als Rissbarriere und zuletzt einer Innenhülle denkbar, wobei weitere Variationen ohne weiteres möglich sind. Zudem sind keine Abschlusselemente an der Stirnseite unbedingt erforderlich.

Das erfindungsgemäße Verfahren ermöglicht es komplexe Bauteile mit verschiedenen Materialien herzustellen. Es ist keine dabei Limitierung auf gerade Rohrsegmente bei Fertigungsgenauigkeit und Erfüllung der jeweiligen erforderlichen Anforderungsprofile mehr gegeben; die gefertigten Bauteile können die unterschiedlichsten Geometrien erhalten.

Die Bauteile können für verschiedenste Anwendungen genutzt werden, so zum Beispiel für Abgasanlagen, in denen eine gezielte Einflussnahme auf die Abgastemperatur erfolgen kann, da die Temperaturführung besser kontrolliert werden kann, bzw. Abwärme für Nutzung in anderen Prozesse entnommen werden kann. Ebenfalls können als Anwendungen in Frage kommen: Wärmetauscher, Gasmischer, eine Begleitheizung z.B. für einen Flüssigmetallkreislauf, sowie Divertoren für Fusionsreaktoren. So sind diese Bauteile insbesondere für die Realisierung von Bauteilen für Fusionsreaktoren, die fluiddurchströmt und hochpräzise Komponenten beliebiger Geometrie sind, gedacht. Funktionsrelevanter Eigenschaften der Bauteile werden durch die erfindungsgemäßen Ausführungsformen wesentlich verbessert.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:
- **Fig. 1**: eine perspektivische Ansicht eines ersten erfindungsgemäßen Bauteils mit Abstandshaltern;
- **Fig. 2**: eine perspektivische Ansicht eines weiteren Bauteils mit Abstandshaltern;
- **Fig. 3**: eine perspektivische Teilansicht einer Stirnseite des Bauteils aus Fig. 2 mit Hohlraum;
- **Fig. 4**: eine perspektivische Teilansicht einer Stirnseite des Bauteils aus Fig. 2 mit Füllmaterial;
- **Fig. 5**: eine schematische Perspektivansicht einer netzartigen Struktur, und
- **Fig. 6 bis 8**: schematische Schnittansichten eines alternativen erfindungsgemäßen Bauteils; und
- **Fig. 9**: eine Ansicht für stirnseitige Abschlussstücke.

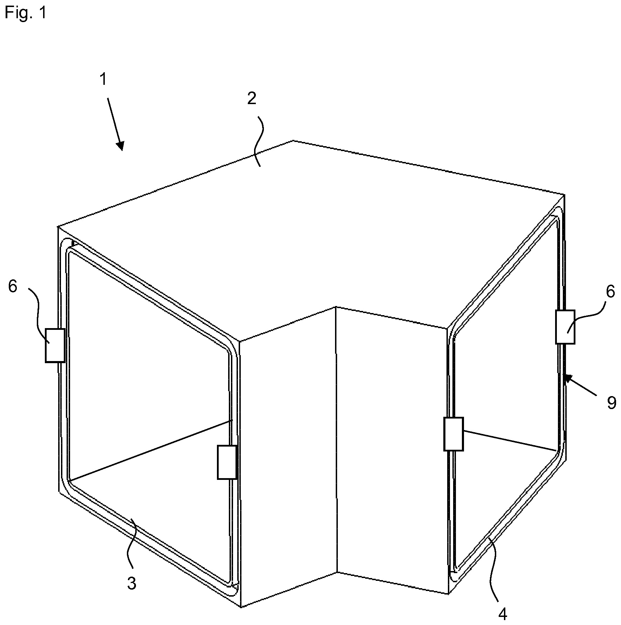

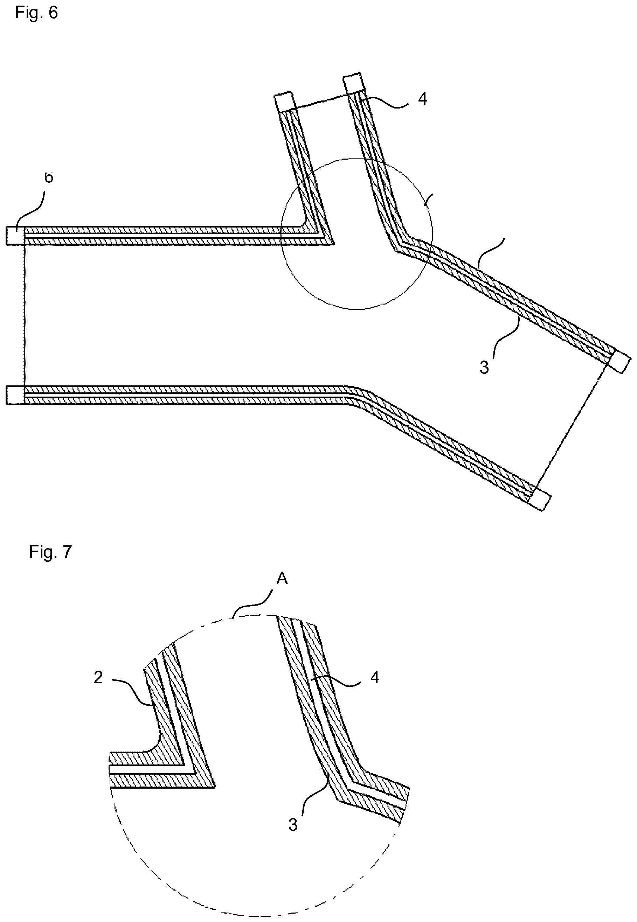

Die erfindungsgemäße Vorrichtung bezieht sich auf Bauteile 1, wie sie beispielhaft in den **Fig. 1** bis **9** dargestellt sind.

Das Bauteil 1 ist ein hohles Bauteil, zum Beispiel ein Rohr, wobei das Bauteil 1 Wandungen vorbestimmter Wanddicke aufweist. Es sind einstückige Wandungsteile koaxial ineinander angeordnet, wobei ein erstes äußeres Wandungsteil 2 in Umfangsrichtung zumindest ein zweites, inneres Wandungsteil 3 vollständig umschließt.

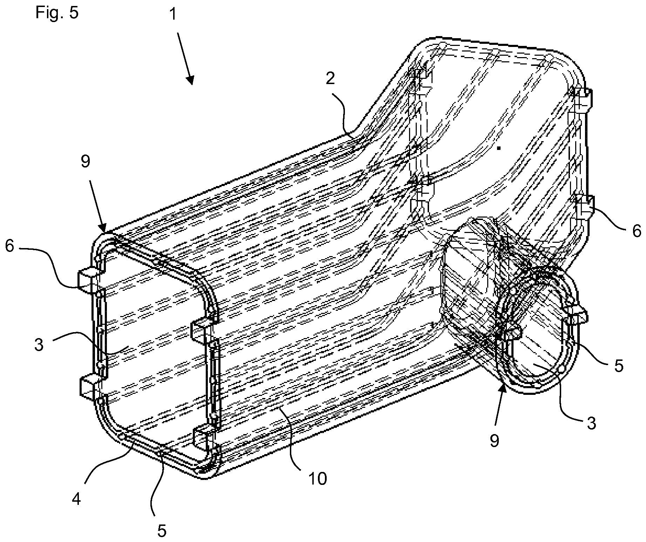

Zwischen dem äußeren Wandungsteil 2 und dem inneren Wandung 3 wird ein Hohlraum 4 oder auch Zwischen- oder Ringspalt gebildet, der mit einem Füllmaterial befüllt werden kann. Die **Fig. 1** bis **5** zeigen teilweise Schritte bzw. Varianten der Herstellung, die mittels generativer Fertigungsverfahren erfolgen kann. Ein Gebilde aus konzentrischen Bauteilwandungen 2,3 wird geschaffen, die nur temporär mit Stegen 10 stirnseitig, aber nicht durchgängig verbunden sind, so dass der Hohlraum 4 zunächst stabilisiert ist. In einer parallelen Ebene entlang der Längserstreckung der Wandungsteile 2, 3 ist der ringspaltförmige Hohlraum 4 gebildet, der durch ein geeignetes Füllmaterial, wie Kugeln 7 aus einem Glas oder anderen keramischen Materialien oder auch einer flachen Zwischenlage aus duktilem Material 7 (**Fig. 5**) aufgefüllt wird.

Dazu kann der Hohlraum 4, bevor er befüllt wird, mit einer netzartigen Struktur an einer Innenseite der Außenwandung 2 oder aber auch an einer Außenfläche der inneren Wandung 3 versehen werden, um das Auffüllen mit rundem Schüttmaterial erleichtert. Diese netzartige Struktur kann durch Stege 10 gebildet werden, wie **Fig. 5** zeigt.

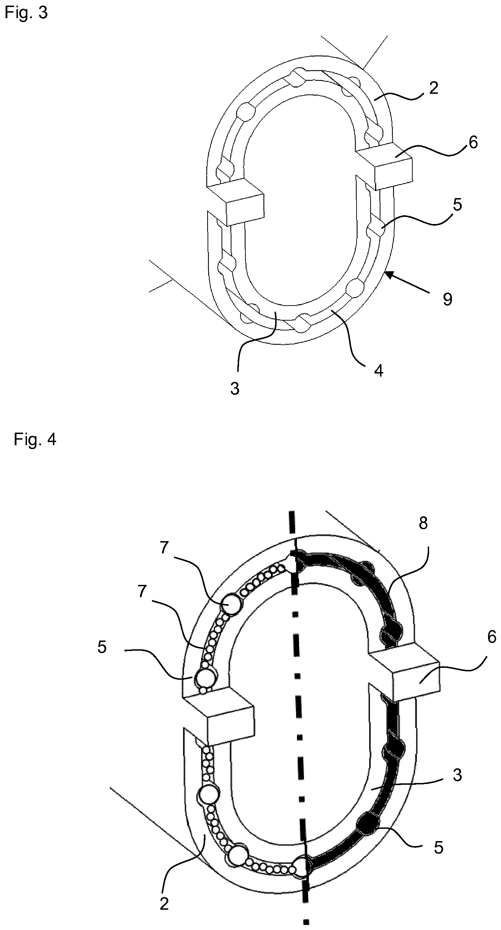

Bevor der Hohlraum 4 befüllt werden kann sowie während der Befüllung des Hohlraums 4, werden die Wandungsteile 2, 3 noch durch Abstandshalter 6 stabilisiert (**Fig. 1** bis **3**). Diese können einfache Stifte mit Halterung sein, oder direkt bei der Fertigung mit-hergestellt werden. Hiernach wird der Hohlraum 4 mit dementsprechenden Füllmaterial befüllt. Nach **Fig. 4** kann entweder eine Befüllung mit Kugeln 7 (linke Seite der **Fig. 4**), die aus Glas oder anderem keramischen Materialien bestehen, erfolgen. Alternativ kann auch eine Flüssigkeit oder Schaum eingebracht werden.

Um eine gute Stabilisierung zu erreichen, sind in den Hohlräumen 4 in regelmäßigen Abständen entlang des Umfangs des ringförmigen Hohlraums 4 Ausbuchtungen 5 vorgesehen. In einer Draufsicht ergeben diese Ausbuchtungen zu beiden Seiten des Hohlraumringes eine kreisförmige Struktur, die dazu ausgebildet ist, zunächst die Abstandshalter 6, die später wieder entfernt werden, und dann die Kugeln 7 aufzunehmen. Auch werden hier größere Korngrößen an Kugeln 7 eingeführt, so dass das innere Wandungsteil 3 zu dem äußeren Wandungsteil 2 gut stabilisiert werden kann.

Die Kugeln 7 in dem Hohlraum 4 dienen dazu die beiden Wandungsteile 2, 3 definiert zueinander zu positionieren, ähnlich wie beispielsweise Lagerschalen in einem Lager fixiert sind. Verbliebene Spalte zwischen den mit Kugeln 7 aufgefüllten Bereichen können mit weiterem Schüttmaterial mit deutlich kleinerem Durchmesser verfüllt werden.

Alternativ kann auch ein vorbestimmtes Material eingefüllt werden, das flüssig eingefüllt oder eingespritzt wird. Nach Aushärtung wird dieses Material zu einer duktilen Zwischenlage 8, die vornehmlich eine ev. Rissausbildung in einer der Wandungen auffangen kann (rechte Seite der **Fig. 4**).

Durch Einfüllen des Füllmaterials 7, 8 werden die Stege 10 automatisch entfernt. Sonstige Stabilisierungen, wie die Abstandshalter 6 können dann auch entfernt werden.

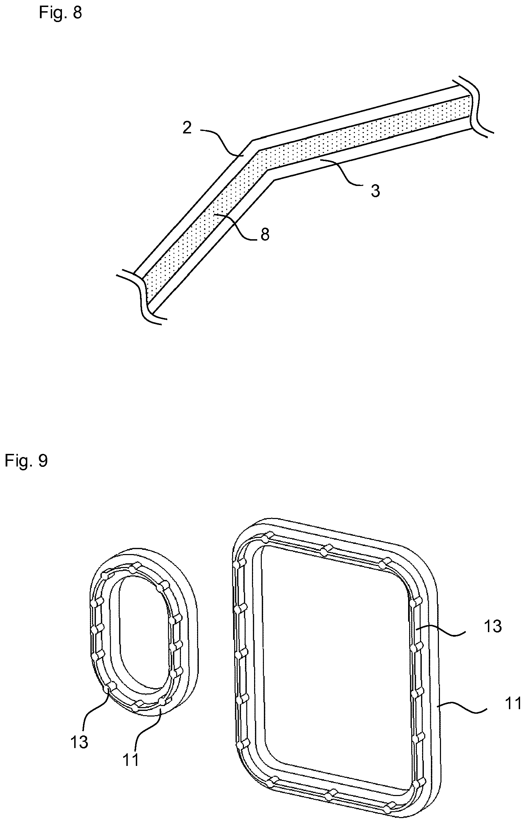

Nach der Befüllung kann die temporäre Verbindung zwischen innerem Wandungsteil 3 und äußerem Wandungsteil 2 entfernt werden. Die ringförmigen Öffnungen des Hohlraums 4 werden an jeder Stirnseite 9 mit stirnseitigen Abschlusselementen 11 verschlossen, um ein Herausfallen der Kugeln 7 zu vermeiden und zu ermöglichen, dass an das Bauteil 1 weitere Komponenten, wie andere Bauteile 1 angefügt werden können (siehe Fig. 9). Durch die keramischen Abschlusselemente 11 ist die elektrische/thermische Isolierung in einem Verbund von Bauteilen 1 auch nicht unterbrochen oder durch (metallische) Schweißnäht geschwächt. Die Abschlusselemente 11 zeigen Strukturen 13, die in ihrer Form und Abmessung dem Hohlraum-Ringspalt 4 inklusive seiner Ausbuchtungen 5 entspricht.

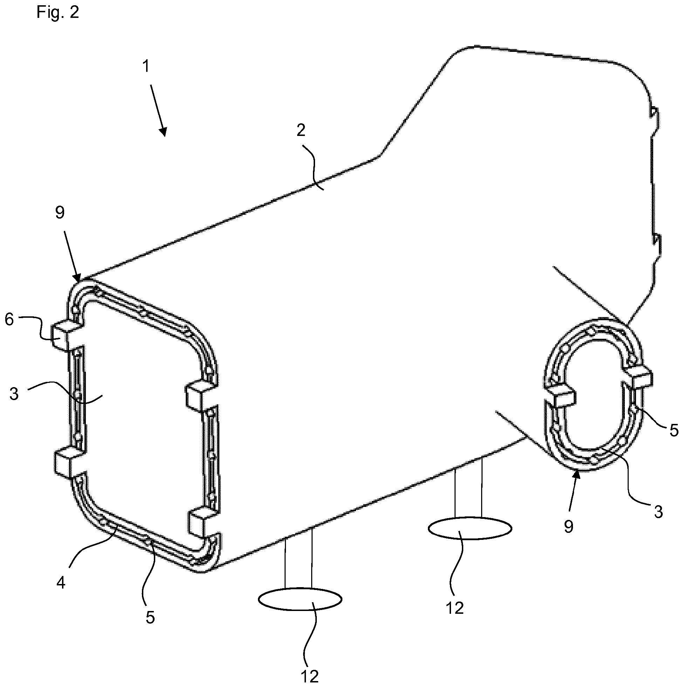

In **Fig. 2** ist zusätzlich gezeigt, dass die äußere Wandung 2 zwei oder mehr Anschlüsse 12, bspw. Ventile aufweist, die fluidisch mit dem Hohlraum 4 verbunden sein können. Diese Anschlüsse 12 sind während dem generativen Fertigungsprozess hergestellt und können an ein Kühlsystem angeschlossen werden. Sie ermöglichen das Durchströmen der Hohlräume mit einem Fluid, wie einem Gas oder einer Kühlflüssigkeit.

Die in **Fig. 1 bis 7** dargestellten Bauteile 1, werden in generativer Herstellungsweise, wie zum Beispiel Pulverbettverfahren (z. B. selektives Laserschmelzen, Lasersintern), oder auch Freiraumverfahren, wie Metall-Pulver-Auftragsverfahren, Flüssigmaterialverfahren, sowie andere Schichtaufbauverfahren, wie 3-D Siebdruck von Metallen gefertigt. Der Hohlraum 4 sollte einen Ringspalt bilden, der in einer vergleichbaren Größenordnung wie die Wandungsstärke liegen sollte, kann aber im Detail jedoch von der Anwendung bestimmt werden und/oder sollte, bevorzugt in einem Bereich von 0,5 mm bis 2 mm, besonders bevorzugt bei 1 mm liegen.

In einer anderen Variante nach **Fig. 4** oder **8** kann vorgesehen sein, dass das äußere Wandungsteil 2 und das innere Wandungsteil 3 mit einer Zwischenlage 8 beabstandet sind, so dass der Hohlraum 4 vollständig ausgefüllt ist. Eine solche Zwischenlage 8 kann durch ein duktiles Material gebildet sein und direkt bei der Fertigung des Bauteils 1 in einem Arbeitsschritt mit eingefügt werden. So werden unterschiedliche Metallpulver für die Wandungsteile 2, 3 und die Zwischenlage 8 übereinander geschichtet und mittels eines speziellen Verfahrens, das zwei Metallpulver gleichzeitig verarbeiten kann (bspw. ein Freiraumverfahren), das Bauteil 1 gefertigt. Alternativ kann die Zwischenlage 8 auch in einem flüssigen Zustand nach vorheriger generativer Herstellung des Bauteils 1 durch Einspritzen, Eintauchen des Körpers etc. erfolgen. So zeigt insbesondere **Fig. 4** diese alternative Art in der rechten Hälfte der Figur.

### BEZUGSZEICHENLISTE

- 1: Bauteil
- 2: Äußere Bauteil-Wandung
- 3: Innere Bauteil-Wandung
- 4: Hohlraum
- 5: Ausbuchtungen
- 6: Abstandshalter
- 7: Kugeln
- 8: Zwischenlage
- 9: Stirnseite
- 10: Stege
- 11: stirnseitiges Abschlusselement
- 12: Anschlüsse
- 13: Strukturen

## Patentansprüche

1. Mehrwandiges Rohrbauteil (1) für fluiddurchströmte Leitungen, wobei das Rohrbauteil (1) ein mittels generativer Fertigungsverfahren gefertigtes, gebogenes, gewinkeltes oder gegabeltes Rohrbauteil (1) ist und aus ineinander angeordneten jeweils einstückigen und nicht verbundenen Wandungen (2, 3) aufgebaut ist, wobei eine äußere Wandung (2) in Umfangsrichtung zumindest eine innere Wandung (3) umschließt, so dass zwischen der äußeren Wandung (2) und der zumindest einen inneren Wandung ein Hohlraum (4) gebildet ist, der mit einem Füllmaterial gefüllt ist.
**dadurch gekennzeichnet, dass**
der Hohlraum (4) in vorbestimmten Abständen entlang seines Umfangs teilkreisförmige Ausbuchtungen (5) aufweist, die den Hohlraum (4) erweitern, wobei sich die Ausbuchtungen (5) in Längsrichtung des Bauteils (1) entlang dessen gesamter Länge erstrecken.

2. Bauteil (1) nach Anspruch 1,
**dadurch gekennzeichnet, dass**
das Füllmaterial ein elektrisch und/oder thermisch isolierendes Material ist.

3. Bauteil (1) nach Anspruch 2,
**dadurch gekennzeichnet, dass**
das Füllmaterial
- bewegliche Kleinteile, insbesondere Kugeln (7) sind, und/oder
- eine duktile Zwischenlage (8) ist, und/oder
- ein Schaum, insbesondere ein offenporiger Schaum ist.

4. Bauteil (1) nach Anspruch 3,
**dadurch gekennzeichnet, dass**
die Kugeln (7) in zwei Größen vorliegen, wobei die größeren der Kugelgrößen in die Abschnitte der Ausbuchtungen (5) passen und die kleineren der Kugelgrößen in den restlichen Abschnitten des Hohlraums (4).

5. Bauteil (1) nach einem der Ansprüche 1 bis 4,
**dadurch gekennzeichnet, dass**
das Bauteil (1) zumindest zwei Stirnseiten (9) aufweist, die mit einem Verschlusselement (10) aus einem elektrisch und/oder thermisch isolierenden Werkstoff verschlossen sind.

6. Bauteil (1) nach einem der Ansprüche 1 bis 5
**dadurch gekennzeichnet, dass**
thermische Differenzdehnungen zwischen Außen und Innenhülle durch elastische Doppelwandstrukturen kompensierbar sind.

7. Verfahren zum Herstellen eines mehrwandigen Rohrbauteils (1) für fluiddurchströmte Leitungen nach einem der Ansprüche 1 bis 6,
**umfassend die Schritte**
- Bereitstellen eines Metallpulvers geeignet zur generativen Erzeugung zumindest eines metallischen Bauteils (1),
- generatives Aufbauen der zumindest einer inneren Bauteil-Wandung (3) und der äußeren Bauteil-Wandung (2), die die zumindest eine innere Bauteil-Wandung (3) umschließt,
- dabei Belassen eines Hohlraums (4) zwischen der äußeren Wandung (3) und der zumindest einen inneren Wandung (2) und offenlassen der Bauteil-Stirnseiten (9),
- Stabilisieren des Abstands der zwei Wandungen durch Stege (10),
- Befüllen des Hohlraums (4) mit Füllmaterial, dabei Entfernen der Stege (10), und
- Verschließen der Bauteil-Stirnseiten (9), dabei Verschließen der Bauteil-Stirnseiten (9) durch einen elektrisch und/oder thermisch isolierenden Werkstoff, insbesondere einen keramischen Werkstoff.

8. Verfahren nach Anspruch 7,
**umfassend die Schritte**
- zur Vorbereitung des Hohlraums vor der Füllung mit Füllmaterial Einbringen von Abstandshaltern (6) in die Ausbuchtungen (5), und/oder
- nach der Füllung mit Füllmaterial Entfernen von Abstandshalter (6) aus den Ausbuchtungen (5).

9. Verfahren zum Herstellen eines mehrwandigen Rohrbauteils (1) für fluiddurchströmte Leitungen nach einem der Ansprüche 1 bis3,
**umfassend die Schritte**
- Bereitstellen zumindest zweier Metallpulvers geeignet zur generativen Erzeugung zumindest eines metallischen Bauteils (1),
- generatives Aufbauen der zumindest einer inneren Bauteil-Wandung (3) und der äußeren Bauteil-Wandung (2), die die zumindest eine innere Bauteil-Wandung (3) umschließt, dabei zum Aufbau der Wandungen (2, 3) Zuführen eines ersten Metalls,
- dabei gleichzeitig zwischen der äußeren Wandung (3) und der zumindest einen inneren Wandung (2) Zuführen eines zweiten Metalls als Füllmaterial, insbesondere der duktilen Zwischenlage (8).

## Claims

1. Multi-walled pipe component (1) for pipelines which convey fluids, wherein the pipe component (1) is a curved, angled, or forked pipe component (1), manufactured by means of generative manufacturing methods, and is constructed from single-piece wall elements (2, 3) which are arranged inside one another and are not connected, wherein an outer wall element (2) encloses in the circumferential direction at least one inner wall element (3), such that a cavity space (4) is formed between the outer wall element (2) and the at least one inner wall element, which is filled with a filling material,
**characterised in that**
at predetermined intervals along its circumference the cavity space (4) comprises circular depressions (5) which widen the cavity space (4), wherein the depressions (5) extend in the longitudinal direction of the component (1) along its entire length.

2. Component (1) according to claim 1,
**characterised in that**
the filling material is an electrically-insulating and/or thermally-insulating material.

3. Component (1) according to claim 2,
**characterised in that**
the filling material
- is formed of movable small parts, in particular spheres (7), and/or
- is a ductile intermediate layer (8), and/or
- is a foam, in particular an open-pore foam.

4. Component (1) according to claim 3,
**characterised in that**
the spheres (7) are present in two sizes, wherein the larger of the sphere sizes fit into the cut-out openings of the depressions (5) and the smaller of the sphere sizes fit into the remaining cut-out openings of the cavity space (4).

5. Component (1) according to any one of claims 1 to 4,
**characterised in that**
the component (1) comprises at least two face sides (9), which are closed by a closure element (10) made of an electrically-insulating and/or thermally-insulating material.

6. Component (1) according to any one of claims 1 to 5,
**characterised in that**
differential thermal expansions between the outer and inner casing can be compensated by elastic double-wall structures.

7. Method for manufacturing a multi-walled pipe component (1) for pipelines which convey fluids according to any one of claims 1 to 6,
**comprising the steps**
- providing a metal powder suitable for the generative production of at least one metallic component (1),
- generative structuring of the at least one inner component wall element (3) and of the outer component wall element (2), which encloses the at least one inner component wall element (3),
- in this situation, leaving a cavity space (4) between the outer wall element (3) and the at least one inner wall element (2), and leaving open the component face sides (9),
- stabilising the spacing interval between the two wall elements by means of webs (10),
- filling the cavity space (4) with filling material, thereby removing the webs (10), and
- closing the component face sides (9), thereby closing the component face sides (9) by means of an electrically-insulating and/or thermally-insulating material, in particular a ceramic material.

8. Method according to claim 7,
**comprising the steps**
- for preparing the cavity space before filling with filling material, introducing interval-maintaining elements (6) into the depressions (5), and/or
- after the filling with filling material, removal of the interval- maintaining elements (6) from out of the depressions (5).

9. Method for manufacturing a multi-walled pipe component (1) for pipelines which convey fluids according to any one of claims 1 to 3,
**comprising the steps**
- providing at least a second metal powder suitable for the generative production of at least one metallic component (1),
- generative structuring of the at least one inner component wall element (3) and of the outer component wall element (2), which encloses the at least one inner component wall element (3), and thereby introducing a first metal for the structuring of the wall elements (2, 3),
- thereby simultaneously introducing between the outer wall element (3) and the at least one inner wall element (2) a second metal as filling material, in particular the ductile intermediate layer (8).

## Revendications

1. Composant tubulaire à plusieurs parois (1) destiné à des conduites dans lesquelles circulent un fluide, constitué par un élément courbé, coudé ou en forme de fourche (1) obtenu par un procédé de fabrication additive, et constitué par des parois (2, 3) respectivement en une seule pièce et non liée positionnée les unes dans les autres, une paroi externe (2) entourant, en direction périphérique au moins une paroi interne (3) de sorte que, entre la paroi externe (2) et la paroi interne soit formée une cavité (4) qui est remplie d'un matériau de remplissage,
**caractérisé en ce que**
la cavité (4) comporte, à intervalles prédéfinis le long de sa périphérie des bossages (5) en forme d'arcs de cercle qui élargissent la cavité (4), les bossages (5) s'étendant dans la direction longitudinale du composant (1) sur la totalité de sa longueur.

2. Composant (1) conforme à la revendication 1,
**caractérisé en ce que**
le matériau de remplissage est un matériau électriquement isolant et/ou thermiquement isolant.

3. Composant (1) conforme à la revendication 2,
**caractérisé en ce que**
le matériau de remplissage est constitué :
- par de petites pièces mobiles particulier des billes (7), et/ou
- par une couche intermédiaire ductile (8), et/ou
- par une mousse, en particulier une mousse à pores ouverts.

4. Composant (1) conforme à la revendication 3,
**caractérisé en ce que**
les billes (7) se présentent selon deux dimensions, les plus grandes billes correspondant aux segments des bossages (5) et les plus petites billes correspondant aux segments restants de la cavité (4).

5. Composant (1) conforme à l'une des revendications 1 à 4,
**caractérisé en ce qu'**
il comporte au moins deux faces frontales (9) qui sont fermées par un élément de fermeture (10) en un matériau électriquement isolant et/ou thermiquement isolant.

6. Composant conforme à l'une des revendications précédentes,
**caractérisé en ce que**
des différences de dilatations thermiques entre l'enveloppe externe et l'enveloppe interne peuvent être compensées par des structures élastiques à double paroi.

7. Procédé de fabrication d'un composant tubulaire à plusieurs parois (1) destiné à des conduites dans lesquelles circulent des fluides conforme à l'une des revendications 1 à 6,
comprenant des étapes consistant à :
- se procurer une poudre métallique adaptée à la fabrication additive d'au moins un composant métallique (1),
- réaliser la construction générative de la paroi interne (3) du composant et de la paroi externe (2) du composant qui entoure la paroi interne (3) du composant,
- maintenir ainsi une cavité (4) entre la paroi externe (3) et la paroi interne (2) et laisser ouvertes les faces frontales (9) du composant,
- stabiliser la distance des deux parois des entretoises (10),
- remplir la cavité (4) d'un matériau de remplissage, en enlevant les entretoises (10), et
- fermer les faces frontales (9) du composant, par un matériau électriquement isolant et/ou thermiquement isolant, en particulier un matériau céramique.

8. Procédé conforme à la revendication 7,
comprenant des étapes consistant à :
- pour préparer la cavité, avant le remplissage avec le matériau de remplissage introduire des éléments d'écartement (6) dans les bossages (5), et/ou
- après le remplissage avec le matériau de remplissage enlever les élément d'écartement (6) des bossages (5).

9. Procédé de fabrication d'un composant tubulaire à plusieurs parois (1) destiné à des conduites dans lesquelles circulent des fluides conforme à l'une des revendications 1 à 3,
comprenant des étapes consistant à :
- se procurer au moins deux poudres métalliques adaptées à la fabrication additive d'au moins un composant métallique (1),
- réaliser la construction générative de la paroi interne (3) du composant et de la paroi externe (2) du composant qui entoure la paroi interne (3) du composant, et pour l'obtention des parois (2, 3) alimenter un premier métal,
- simultanément, entre la paroi externe (3) et la paroi interne (2) ou alimenter un second métal constituant un matériau de remplissage, en particulier la couche intermédiaire ductile (8).
